# EUROPÄISCHE PATENTSCHRIFT

(11) **EP 1 158 188 B1**
(45) Veröffentlichungstag und Bekanntmachung des Hinweises auf die Patenterteilung: **06.09.2006**
(21) Anmeldenummer: 01110935.2
(22) Anmeldetag: 05.05.2001
(51) Int. Cl.: F16C 13/02, D21F 7/02

(54) **Antriebseinheit**
Driving unit
Dispositif d'entraînement

(30) Priorität: 22.05.2000 DE 10025316; 21.07.2000 DE 10035578
(43) Veröffentlichungstag der Anmeldung: 28.11.2001
(60) Teilanmeldung: 04100531.5
(73) Patentinhaber: Voith Paper Patent GmbH, 89522 Heidenheim (DE)
(72) Erfinder: Beisiegel, Diethelm, 89547 Gerstetten (DE)

(56) Entgegenhaltungen:
- WO-A-90/08222
- WO-A-96/22504
- DE-U- 8 703 410
- US-A- 1 909 792
- US-A- 3 997 952
- US-A- 4 614 228

## Beschreibung

Die Erfindung betrifft eine Maschine zur Herstellung und/oder Bearbeitung einer laufenden Materialbahn, insbesondere aus Papier oder Karton mit einer Antriebseinheit zum Antreiben von drehenden Bauteilen wie Walzen und Zylinder, einer derartigen Maschine, und mit solchen drehenden Bauteilen, die jeweils an wenigstens einem ihrer stirnseitigen Enden einen Lagerzapfen aufweisen und einen eigenen Antriebsmotor aufnehmen. Das drehende Bauteil und sein Antriebsmotor sind gemeinsam ortsfest abgestützt. Es ist ein Gehäuse vorgesehen, welches sowohl den Antriebsmotor als auch die Lagerung des Bauteiles umgibt.

Der Antrieb von Bauteilen, das heißt der Walzen und Zylinder z.B. Trockenzylinder, Streichwalzen für Streichmaschinen, Kalanderwalzen, Saugwalzen, Leitwalzen, Presswalzen und dergleichen innerhalb einer Papiermaschine, einer Papierveredefungsmaschine oder Papier- Weiterverarbeitungsmaschine erfolgt derzeit über eine Vielzahl von Motoren auf der Antriebsseite dieser Maschinen. Damit sind auch eine Vielzahl von Getrieben, Kupplungen, Gelenkwellen und Anschlussteilen vorhanden. Diese Dichte von sogenannten Antriebsteilen schränkt bei der Montage oder Wartung der Maschine die Zugänglichkeit äußerst ein. Besonders für die vorhandenen Getriebezahnräder sind Radkästen notwendig, die die ganze Konstruktion teuer und aufwendig machen.

Aus diesem Grunde ist mit der DE 8703410.7 eine Lösung geschaffen worden, die erstmals einen Antrieb unter Wegfall eines Getriebes und damit Wegfall der vorstehend genannten Radkästen ermöglicht.

Aus der genannten DE 8703410.7 ist ein Trockenzylinder bekannt, der mittels einem Permanentmagnetmotor angetrieben wird. Der Wellenzapfen dieses Trockenzylinders nimmt den elektrischen Antriebsmotor und die Wellenlagerung auf und ist in einem ortsfest abgestützten Rahmenteil (bzw. Stuhlung der Papiermaschine) gelagert. Antriebsmotor und Lagerung sind gemeinsam in einem Gehäuse untergebracht. Das Gehäuse ist in Richtung auf die Stirnwand des Zylinders hohlzylindrisch erweitert und nimmt in diesem erweiterten Bereich den Antriebsmotor auf.
Der Permanentmagnetmotor weist eine Hohlwelle auf zum Aufstecken auf den Walzenzapfen und ist darüber hinaus als Innen oder Außenläufer aufbaubar.

Weiterhin ist offenbart, dass das Motorgehäuse in seiner Seitenwand und in seinem Deckel mit Öffnungen zur Durchspülung des Motorinnenraumes mit Kühlluft versehen ist.

Die oben erwähnte Luftkühlungführt beim Einsatz des Motors für umhauste Zylinder bzw. Walzen zu Veränderungen der klimatischen Verhältnisse und ist daher nicht einsetzbar.
In Versuchen wurde deshalb zur Kühlung Wasser verwendet.
Insbesondere beim Einsatz der Motoren für den Antrieb von Trockenzylindern, die sich Innerhalb der Trockenhaube der Trockenpartie einer Papier-Herstellungsmaschine befinden, kam es aufgrund der niedrigen Frischwassertemperaturen zu einer verstärkten Kondensatbildung im Inneren des Motors.

Der Erfindung liegt daher die Aufgabe zu Grunde, eine Maschine zu schaffen, bei der
die Antriebsmotoren besser als bisher kühlbar sind.

Die Aufgabe der Erfindung wird durch die kennzeichnenden Merkmale des Anspruches 1 gelöst.

Der Erfinder hat erkannt, dass eine ausreichende Kühlung gegeben ist, wenn dafür das bereits vorhandene Öl der Zentralschmierung der Herstellungs- oder Verarbeitungsmaschine (z.B. der Papiermaschine) verwendet wird.

Eine Zentralschmierung ist fester Bestandteil einer solchen Maschine.

Das Öl der Zentralschmierung erreicht im Öl-Kreislauf eine Temperatur von ca. 40°C und verursacht dadurch beim erfindungsgemäßen Einsatz keine Kondensationsprobleme im elektrischen Antriebsmotor.

Ein weiterer Vorteil besteht darin, dass dieses Öl jeder Zeit zur Verfügung steht und es auch zu den Lagerstellen der drehenden Bauteile, also Walzen und Zylinder, wie Trockenzylinder, Streichwalzen, Kalanderwalzen usw., geführt wird.
Es sind daher für die erfindungsgemäße Lösung, siehe Anspruch 1, nur sehr geringfügige zusätzliche Änderungen bzw. Einbauten notwendig.
Die räumliche sehr nahe Anordnung der Lagerstelle und des Antriebsmotors am selben Walzenzapfen und die gemeinsame Unterbringung im Gehäuse machen es möglich, dass über eine einzubauende Abzweigung und diverse Zuteil- bzw. Dosiergeräte das Öl der Zentralschmierung gleichfalls zur Motorkühlung verwendet werden kann.

Als Mittel zur Führung des Kühlmediums -also des abgezweigten Teiles des Öles aus der Zentralschmierung- dient ein im Inneren des Antriebsmotors vorzusehender Kühlkanal.
Der Kühlkanal lässt sich zweckmäßig in Form einer hohlförmigen Kühlschlange ausbilden, die an der Innenwandung des Motors angebracht ist.
Die Kühlschlange ist dabei spiralförmig ausgebildet und windet sich koaxial um den Rotor bzw. den Stator des Motors.
Der benötigte Platzbedarf ist dadurch äußerst gering und dennoch wird eine effektive Kühlung erreicht.

Eine weitere Variante der Ausbildung des Kühlkanals kann auch darin bestehen, dass in die Innenwandung des Motorgehäuses Kerben, bzw. eine schraubenlinienartig umlaufende Kerbe eingearbeitet, beispielsweise eingegossen ist, in der das Öl aufgenommen wird.
Diese Variante ist dann sinnvoll, wenn der Motor mit einem sogenannten Außenläufer ausgerüstet ist, so dass das Öl auf Grund der Fliegkraftwirkung bei drehendem Rotor im Kanal verbleibt und somit auf sehr einfache Weise den Innenraum des Motors kühlt.

Für das Antreiben der Bauteile hat sich besonders ein handelsüblicher Asynchron-Drehstrommotor erwiesen. Solch ein Motor ist ein sogenannter Aufsteckmotor, der in sehr schmaler Breite verfügbar ist Als Antriebsmotor eignet sich dabei ein solcher, wie er in der DE 29908433 beschrieben, hierbei allerdings nur allein von einem Gehäuse umgeben ist.

Die Erfindung soll nachstehend anhand eines Ausführungsbeispieles näher erläutert werden.

Es zeigen
- **Figur 1 :**: in schematischer Darstellung einen Längsschnitt durch das erfindungsgemäße, antriebsseitige Ende einer Walze einer Papiermaschine mit Kühlkanal für den Antriebsmotor
- **Figur 2:**: eine Detaildarstellung einer Variante des Kühlkanals aus Figur 1

In den Figuren wurden für gleiche Bauteile auch gleiche Positionszahlen verwendet.

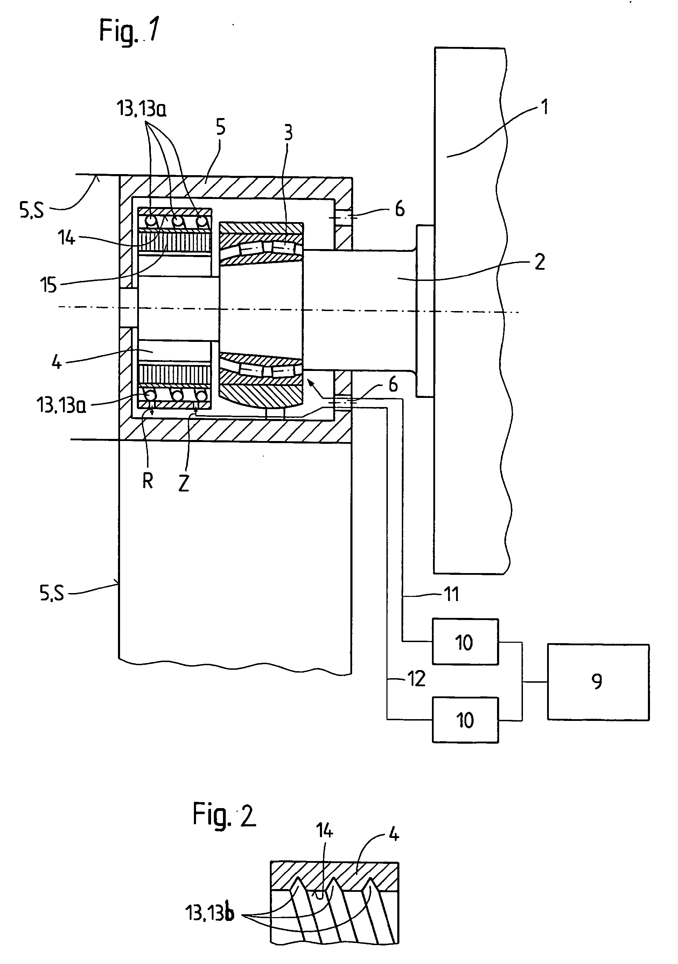

In der **Figur 1** das stirnseitige Ende der Walze einer Papiermaschine 1, Wellenzapfen 2, Wälzlager 3 als Lagerstelle für Walze 1 , ein schmaler, handelsüblicher Drehstrom- Asynchron-Aufsteck-Motor 4 und ebenso ein das Lager 3 sowie den Motor 4 umhausendes, quaderförmiges Gehäuse 5, welches mit weiteren gleichartig aufgebauten Gehäusen zu einer Stuhlung bzw. ortsfesten Abstützung der Papiermaschine aufbaubar und nutzbar ist, dargestellt.

In der Wandung des Gehäuses 5 sind Bohrungen 6 vorhanden, durch die verschiedene Leitungen mit Kühlfluid und Schmiermittel in das Innere des Gehäuses 5 gelangen können.

Als Kühlfluid dient Öl, welches von der Zentralschmierung 9 für die gesamte Papiermaschine bereitgestellt wird.

Das Öl gelangt von der Zentralschmierung 9 über nicht dargestellte Fördereinrichtungen und Zuteil- oder Dosiergeräte 10 zum Einen durch Leitung 11 an die Lagerstelle 3 der Walze zu deren Schmierung und zum Anderen durch Leitungen 12 in das Innere des Motors 4 zu dessen Kühlung, wie mit Pfeil Z für Zuführung und Pfeil R für Rücklauf im Kreislaufsystem in der Figur 1 dargestellt ist.

Bewerkstelligt wird die Kühlung zweckmäßigerweise mittels einem Kühlkanal 13, der mit der Leitung 12 in Verbindung steht, das Öl aufnimmt und im Innenraum des Motors 4 gleichmäßig verteilt und dadurch den Motor gleichmäßig und zuverlässig vor Überhitzung schützt.

Der Kanal kann dabei sehr zweckmäßig als hohlförmige, metallische Kühlschlange 13a ausgebildet sein.

Wie in der **Figur 1** ersichtlich ist, liegt die Kühlschlange 13a mit ihrer Außenfläche an der Innenwandung 14 des Motors 4 an. Die Kühlschlange ist darüber hinaus spiralförmig gewunden und umzieht somit koaxial den innenliegenden Rotor (oder Stator) 15 des Motors, so dass eine sehr gleichmäßige Kühlung des Motorinnenraumes gewährleistet ist.
In der **Figur 1** ist die spiralig geformte Kühlschlange 13a mit symbolhaften Kreisen dargestellt, da der Querschnitt der Kühlschlange vorzugsweise kreisförmig ist.
Der Querschnitt könnte selbstverständlich auch eine anderen Form aufweisen, aber die Kühlschlange 13a ist mit kreisförmigem Querschnitt am einfachsten fertigbar und als Spirale biegbar.

Eine weitere Variante der Ausbildung des Kanales 13 ist in der **Figur 2** dargestellt.

Hier ist der Kanal ebenfalls spiralig d.h. schraubenlinienartig als Kerbe 13b direkt in die Innenwandung des Antriebsmotors 4 eingearbeitet. Der Querschnitt ist dabei polygonal, beispielsweise dreieckig ausgebildet, kann aber auch wie ein Rundgewinde geformt sein.

## Patentansprüche

1. Maschine zur Herstellung und/oder Bearbeitung einer laufenden Materialbahn, insbesondere aus Papier oder Karton, mit einer Antriebseinheit zum Antreiben von drehenden Bauteilen, wie Walzen und Zylinder einer derartigen Maschine und mit solchen drehenden Bauteilen wobei
a) die drehenden Bauteile (1) jeweils an wenigstens einem ihrer stirnseitigen Enden Lagerzapfen (2) aufweisen
b) die stirnseitigen Lagerzapfen (2) jeweils einen eigenen Antriebsmotor (4) aufnehmen
c) das jeweilige Bauteil (1) und der Antriebsmotor (4) gemeinsam ortsfest abgestützt sind
d) ein Gehäuse (5) vorgesehen ist, welches sowohl den Antriebsmotor (4) als auch die Lagerung (3) des jeweiligen Bauteiles (1) umgibt
e) das Gehäuse (5) mit Öffnungen (6) versehen ist, die geeignet sind, um ein Kühlfluid zur Kühlung des Antriebsmotors (4) hindurch zu lassen,
**dadurch gekennzeichnet, dass**
als Kühlfluid Öl dient und das als Kühlfluid dienende Öl aus der Zentralschmierung (9) der Maschine zur Herstellung und/oder Bearbeitung der Materialbahn über wenigstens ein Dosiergerät (10) und wenigstens eine Leitung (11,12) bereitstellbar ist, welches Öl gleichfalls zur Schmierung der Lagerstelle (3) des jeweiligen drehenden Bauteiles (1) vorgesehen ist.

2. Maschine nach Anspruch 1,
**dadurch gekennzeichnet, dass**
zur Führung des Öles im Inneren des Antriebsmotors (4) ein Kühlkanal (13) vorgesehen ist.

3. Maschine nach Anspruch 2,
**dadurch gekennzeichnet, dass**
der Öl-führende Kühlkanal (13) als eine Kühlschlange (13a) ausgebildet ist, welche das verwendete Öl gleichmäßig durch den Motorinnenraum leitet.

4. Maschine nach Anspruch 2 oder 3,
**dadurch gekennzeichnet, dass**
der Kühlkanal (13) spiralförmig ausgebildet ist und den Rotor/Stator (12) des Antriebsmotors (4) konzentrisch umgibt und wobei die Kühlschlange (13a) mit Ihrer Außenfläche an der Innenwandung (14) des Antriebsmotors (4) angebracht ist.

5. Maschine nach Anspruch 3 oder 4,
**dadurch gekennzeichnet, dass**
die Kühlschlange (13a) einen kreisförmigen Querschnitt aufweist.

6. Maschine nach einem der vorhergehenden 1 und 2 Ansprüche,
**dadurch gekennzeichnet, dass**
der Kühlkanal (13) als Kerbe (13b) schraubenlinienartig in die Innenwandung (14) des Antriebsmotors (4) eingearbeitet ist und einen polygonalen, vorzugsweise dreieckigen oder einen halbkreisförmigen Querschnitt aufweist.

7. Maschine nach einem der vorhergehenden Ansprüch,
**gekennzeichnet durch**,
das Vorsehen getrennter Dosier-bzw. Zuteilgeräte (10), wobei jeweils wenigstens ein Gerät mit einer Leitung (11) zur Schmierung der Lagerstelle (3) des drehenden Bauteiles (1) und wenigstens ein weiteres Gerät mit einer Leitung (12), welche ihrerseits mit dem Kühlkanal (13) zur Kühlung des Antriebsmotors (4) in Verbindung steht, vorhanden ist.

8. Maschine nach einem oder mehreren der vorangehenden Ansprüche,
**dadurch gekennzeichnet, dass**
der Antriebsmotor ein elektrischer-Antriebsmotor (4) in form eines an sich bekannten Hohlwellen- Drehstrom-Asynchron- Aufsteck- Motors ist.

## Claims

1. Machine for producing and/or processing a moving material web, in particular of paper or board, having a drive unit for driving rotating components such as rolls and cylinders of such a machine, and having such rotatable components,
a) the rotating components (1) each having bearing journals (2) on at least one of their ends,
b) the end bearing journals (2) each accommodating an individual drive motor (4),
c) the respective component (1) and the drive motor (4) being jointly supported in a fixed location,
d) a housing (5) being provided, which surrounds both the drive motor (4) and the housing (3) of the respective component (1), and
e) the housing (5) being provided with openings (6) which are suitable to allow through a cooling fluid for cooling the drive motor (4),
**characterized in that**
the cooling fluid used is oil and the oil used as cooling fluid can be provided from the central lubrication (9) of the machine for producing and/or processing the material web via at least one metering device (10) and at least one line (11, 12), which oil is likewise provided for lubricating the bearing point (3) of the respective rotating component (1).

2. Machine according to Claim 1, **characterized in that** a cooling duct (13) is provided in order to carry the oil in the interior of the drive motor (4).

3. Machine according to Claim 2, **characterized in that** the oil-carrying cooling duct (13) is formed as a cooling loop (13a), which conducts the oil used uniformly through the interior of the motor.

4. Machine according to Claim 2 or 3, **characterized in that** the cooling duct (13) is spiral and surrounds the rotor/stator (12) of the drive motor (4) concentrically, the cooling duct (13a) being fitted by its outer surface to the inner wall (14) of the drive motor (4).

5. Machine according to Claim 3 or 4, **characterized in that** the cooling loop (13a) has a circular cross section.

6. Machine according to one of the preceding Claims 1 and 2, **characterized in that** the cooling duct (13) is machined into the inner wall (14) of the drive motor (4) in the manner of a helix as a notch (13b) and has a polygonal, preferably triangular or semicircular, cross section.

7. Machine according to one of the preceding claims, **characterized by** the provision of separate metering or allocation devices (10), there being in each case at least one device having a line (11) for lubricating the bearing point (3) of the rotating component (1) and at least one further device having a line (12) which for its part is connected to the cooling duct (13) for cooling the drive motor (4).

8. Machine according to one or more of the preceding claims, **characterized in that** the drive motor is an electric drive motor (4) in the form of a plug-on hollow shaft three-phase asynchronous motor known per se.

## Revendications

1. Machine de fabrication et/ou de traitement d'une bande de matériau en mouvement, notamment en papier ou en carton, comprenant une unité d'entraînement pour l'entraînement de composants rotatifs, comme des rouleaux et des cylindres d'une telle machine, et comprenant de tels composants rotatifs, dans laquelle :
a) les composants rotatifs (1) présentent à chaque fois sur au moins l'une de leurs extrémités frontales des tourillons (2),
b) les tourillons frontaux (2) recevant à chaque fois un moteur d'entraînement propre (4),
c) le composant respectif (1) et le moteur d'entraînement (4) étant supportés en commun de manière fixe,
d) un boîtier (5) étant prévu, lequel entoure le moteur d'entraînement (4) ainsi que le support sur palier (3) du composant respectif (1),
e) le boîtier (5) est pourvu d'ouvertures (6) qui sont appropriées pour laisser passer du fluide de refroidissement du moteur d'entraînement (4),
**caractérisée en ce que**
l'on utilise de l'huile comme fluide de refroidissement et l'huile servant de fluide de refroidissement peut être fournie à partir de la lubrification centrale (9) de la machine pour la fabrication et/ou le traitement de la bande de matériau par le biais d'au moins un appareil de dosage (10) et d'au moins une conduite (11, 12), cette huile étant prévue également pour lubrifier la zone de palier (3) du composant rotatif respectif (1).

2. Machine selon la revendication 1,
**caractérisée en ce que**
pour l'alimentation en huile, on prévoit un canal de refroidissement (13) à l'intérieur du moteur d'entraînement (4).

3. Machine selon la revendication 2,
**caractérisée en ce que**
le canal de refroidissement (13) amenant l'huile est réalisé sous la forme d'un serpentin de refroidissement (13a) qui conduit l'huile utilisée uniformément à travers l'intérieur du moteur.

4. Machine selon la revendication 2 ou 3,
**caractérisée en ce que**
le canal de refroidissement (13) est réalisé en forme de spirale et entoure le rotor/stator (12) du moteur d'entraînement (4) de manière concentrique, le serpentin de refroidissement (13a) étant monté avec sa surface extérieure sur la paroi intérieure (14) du moteur d'entraînement (4).

5. Machine selon la revendication 3 ou 4,
**caractérisée en ce que**
le serpentin de refroidissement (13a) présente une section transversale de forme circulaire.

6. Machine selon l'une quelconque des revendications 1 et 2 précédentes,
**caractérisée en ce que**
le canal de refroidissement (13) est réalisé sous forme d'entaille (13b) incorporée sous forme hélicoïdale dans la paroi intérieure (14) du moteur d'entraînement (4) et présente une section transversale polygonale, de préférence triangulaire ou semi-circulaire.

7. Machine selon l'une quelconque des revendications précédentes,
**caractérisée en ce que**
l'on prévoit des appareils de dosage ou de distribution séparés (10), à chaque fois au moins un appareil étant en liaison avec une conduite (11) pour lubrifier la zone de palier (3) du composant rotatif (1) et au moins un appareil supplémentaire étant en liaison avec une conduite (12) qui est à son tour en liaison avec le canal de refroidissement (13) pour refroidir le moteur d'entraînement (4).

8. Machine selon l'une quelconque ou plusieurs des revendications précédentes,
**caractérisée en ce que**
le moteur d'entraînement est un moteur d'entraînement électrique (4) sous forme de moteur enfichable asynchrone triphasé à arbre creux connu en soi.
